# EUROPÄISCHE PATENTSCHRIFT

(11) **EP 2 656 053 B1**
(45) Veröffentlichungstag und Bekanntmachung des Hinweises auf die Patenterteilung: **21.10.2015**
(21) Anmeldenummer: 11793711.0
(22) Anmeldetag: 24.11.2011
(51) Int. Cl.: B21B 38/00, G06T 7/00, G01N 21/892

(54) **VERFAHREN UND VORRICHTUNG ZUR OBERFLÄCHENINSPEKTION VON BANDSTÜCKEN**
METHOD AND DEVICE FOR THE SURFACE INSPECTION OF STRIP PIECES
PROCÉDÉ ET DISPOSITIF D'INSPECTION DE SURFACE DE MORCEAUX DE BANDE

(30) Priorität: 21.12.2010 DE 102010055340; 26.09.2011 DE 102011083405
(43) Veröffentlichungstag der Anmeldung: 30.10.2013
(73) Patentinhaber: SMS group GmbH, 40237 Düsseldorf (DE)
(72) Erfinder: RICHTER, Hans-Peter, 57520 Friedewald (DE); ACHENBACH, Dirk, 57339 Erndtebrück (DE)
(74) Vertreter: Klüppel, Walter
(86) Internationale Anmeldenummer: PCT/EP2011/070878
(87) Internationale Veröffentlichungsnummer: WO 2012/084399

(56) Entgegenhaltungen:
- JP-A- 2000 254 725
- JP-A- 2006 105 791

## Beschreibung

Die Erfindung betrifft ein Verfahren zur Oberflächeninspektion von Bandstücken.

Im Stand der Technik werden im Anschluss an einen Walzprozess Walzprodukte zur Qualitätskontrolle an ihren Oberseiten auf Walzfehler kontrolliert. Diese Qualitätskontrolle erfolgt in nachgeschalteten Linien oder Einrichtungen. Üblicherweise werden Bandstücke von einem Metallband abgetrennt und zu einer Bandinspektionseinheit überführt. Die Bandinspektion in der Bandinspektionseinheit erfolgt visuell durch Prüfpersonal. Bei der Überprüfung werden unter anderem Ein- und Abdrücke, die häufig periodisch auftreten, erkannt. Die periodisch auftretenden Fehler lassen auf einen Defekt der Walzenoberfläche schließen und zeigen an, dass ein Walzenwechsel der Ärbeitswalze erfolgen muss. Dieser Walzenwechsel sollte schnellstmöglich erfolgen, damit die Arbeitswalze, die den Oberflächendefekt aufweist, keinen weiteren Ausschuss produzieren kann. Damit eine Periodizität erkannt werden kann, müssen die Bandstücke auf eine Länge, die mindestens zwei vollen Walzenumfängen entspricht, geschnitten werden.

Zur Erkennung weiterer Fehler der Oberflächenstrukturen der Bandstücke erfolgt ein Anschleifen der Bandoberfläche in der Bandinspektionseinheit von Hand. Eine Wendevorrichtung ermöglicht eine Bandinspektion durch das Prüfpersonal der Ober- und Unterseite. Dazu werden die geschnittenen Bandstücke von einer Klemmvorrichtung gehalten und derart geschwenkt, dass eine Oberflächeninspektion, auch auf der anderen Seite des Walzproduktes, durch das Bedienpersonal erfolgen kann. Nach der Qualitätskontrolle wird das Bandstück auf einen Bandstapel gelegt, abtransportiert und gegebenenfalls entsorgt.

In den Fachartikeln "Surface inspection system with defect classification, Iron and Steel Engineer, May 1990" und "Effizienzoptimierung in der Flachstahlherstellung durch Oberflächeninspektion, Stahl und Eisen, Dezember 2001" werden Oberflächeninspektionssysteme vorgestellt, die Fehler, zum Beispiel Schrammen oder Walzenfehler, auf der Oberfläche eines Bandes mit Hilfe von Sensoren, bzw. Kamerasystemen detektieren und elektronisch auswerten.

Ebenfalls werden in den Druckschriften EP 0 880 023, EP 1 972 930 und DE 32 22 753 Vorrichtungen und entsprechende Verfahren zur automatischen Detektion von Oberflächenfehlern bei Strangguss- und Walzerzeugnissen diskutiert.

Ein Verfahren zur Oberflächeninspektion von Bändern mit Hilfe einer Kamera beschreibt die Druckschrift JP 2006 105 791.

Da viele Fehlerarten nur durch Anschleifen der Bandoberfläche sichtbar werden, ist ein Nutzen der automatischen Oberflächeninspektion zurzeit nur begrenzt gegeben. Im Fokus der Optimierung steht deshalb das Bandinspektionssystem, bei dem die Begutachtung auch visuell durch Bedienpersonal erfolgt. So wird in der EP 1 590 106 ein Inspektionssystem vorgestellt, das dem Prüfpersonal beim Anschleifen der Bandstücke eine optimale Ergonomie ermöglicht und somit die Leistungsmöglichkeiten verbessert und die Arbeitsbedingungen optimiert. Nachteilig bei den bekannten Oberflächeninspektionssystemen ist jedoch, dass die Bandstücke eine konstante Länge von mindestens zwei vollen Walzenumfängen, beispielsweise in Tandemstraßen 6000 mm, aufweisen müssen, um periodische Walzenfehler zu erkennen. Durch die geometrischen Abmaße der

Bandstücke ergibt sich ein notwendiger räumlicher Platzbedarf für die Bandinspektionseinheit. Ebenfalls ist die Handhabung der Bandstücke aufgrund ihrer Länge umständlich und zeitraubend. Auch der Abtransport ist zeitaufwändiger. Ein weiterer Nachteil besteht darin, dass ein Ergebnis der Oberflächeninspektion nicht für ein laufendes Band vorliegt, sondern erst zeitversetzt ermittelt werden kann. Damit kann die Arbeitswalze auch erst mit dem entsprechenden Zeitversatz ausgetauscht werden und weiteres Metallband, beispielsweise mehrere Coils, werden mit der defekten Arbeitswalze bearbeitet. Der so entstandene Ausschuss an gewalzten Metallbändern mit fehlerhafter Oberfläche ist enorm und kostenintensiv.

Aufgabe der Erfindung ist es, ein bekanntes Verfahren und eine bekannte Vorrichtungen zur Oberflächeninspektion von Bändern dahingehend zu verbessern, dass eine einfache, flexible und schnellere Handhabung der zu inspizierenden Bandstücke erfolgen kann.

Die gestellte Aufgabe wird durch das Verfahren nach Anspruch 1 gelöst. Dieses Verfahren ist dadurch gekennzeichnet, dass folgende Schritte abgearbeitet werden:
Abtrennen der Bandstücke von einem Metallband, wobei die Bandstücke eine Länge kleiner dem zweifachen Umfang einer Arbeitswalze, mit welcher das Metallband zuvor gewalzt wurde, aufweisen,
automatisches Überprüfen der Ober- und/oder Unterseite der abgetrennten Bandstücke mit Hilfe eines Kamerasystems und einer Auswerteinrichtung im Hinblick auf eventuell vorhandene durch die Arbeitswalze verursachte periodische Fehlerarten und
Beenden des Verfahrens der Oberflächeninspektion, wenn periodisch auftretende Fehlerarten detektiert werden oder
Zuführen der abgetrennten Bandstücke zu einer Bandinspektionseinheit zum Überprüfen durch Prüfpersonal auf nicht periodische Fehlerarten, wenn zuvor keine periodischen Fehlerarten detektiert wurden.

### Anwalzen:

Unter dem Begriff Anwalzen wird in dieser Anmeldung der erstmalige Durchlauf des Metallbandes durch die Walzanlage verstanden, bis die Arbeitswalzen zum Walzen des Metallbandes richtig angestellt sind.

### Bandanfang:

Der Anfang eines zu walzenden Metallbandes wird von den Arbeitswalzen nicht auf die gewünschten Dicke gewalzt, da dieser Bandanfang schon durch die Anlage durchgelaufen ist, bevor die Arbeitswalzen richtig eingestellt waren. Dieser erste Bandanfang wird abgeschnitten und entsorgt. Der durch das Abtrennen des ersten Bandanfangs neu entstandene Bandanfang, den das Metallband jetzt aufweist, ist vorzugsweise schon auf die gewünschte Dicke durch die Arbeitswalzen gewalzt und wird nun von dem gewalzten Metallband zur Überprüfung auf Fehlerarten abgetrennt. Da das erfindungsgemäße Verfahren mit abgetrennten Bandstücken arbeitet, die kürzer als die zweifache Länge des Arbeitswalzenumfangs sind, ergibt sich die Notwendigkeit für ein mehrmaliges Abtrennen von Bandanfängen desselben Metallbandes, so oft, bis die abgetrennten Bandstücke insgesamt - wenn hintereinandergelegt - ein gestückeltes Bandstück mit einer Länger größer gleich der zweifachen Länge des Arbeitswalzenumfangs ergeben. Im erfindungsgemäßen Sinne ist das Merkmal Bandanfang derart zu verstehen, dass mehrere Bandstücke der gewünschten Dicke so oft wie benötigt vom jeweiligen Anfang des einen Metallbandes abgetrennt werden.

Dass gemäß Anspruch 1 die Bandstücke mit einer Länge kleiner dem zweifachen Umfang einer Arbeitswalze, mit welcher das Metallband zuvor gewalzt wurde, abgetrennt werden, bietet den Vorteil, dass die Bandstücke kürzer als im Stand der Technik sind. Die Handhabung der Bandstücke während einer Sichtkontrolle durch das Prüfpersonal erfolgt dadurch einfacher und problemloser. Auch gestaltet sich das Stapeln und Abtransportieren wesentlich effizienter, da eine größere Anzahl abgetrennter Bandstücke gestapelt und abtransportiert werden können, als Bandstücke, die längere Abmessungen aufweisen.

Vorteilhafterweise erfolgt ein automatisches Überprüfen der Ober- und/oder Unterseite der abgetrennten. Bandstücke mit Hilfe eines Kamerasystems und einer Auswerteinrichtung im Hinblick auf eventuell vorhandene, durch die Arbeitswalze verursachte, periodische Fehlerarten. Damit ist der Vorteil verbunden, schnellstmöglich die periodischen Oberflächenfehler zu detektieren und die Arbeitswalze mit den fehlerhaften Walzenabdrücken zeitnah auswechseln zu können. Noch während das Metallband, von dessen Bandanfang das zu überprüfende Bandstück abgetrennt wurde, gewalzt wird, ist das Ergebnis der Überprüfung auf periodische Fehlerarten bekannt. In der Bandinspektionseinheit kann sich das Prüfpersonal auf die nicht periodisch auftretenden Fehlerarten konzentrieren und die Inspektionszeit wird verkürzt. Vorteilhafterweise überprüft das Kamerasystem die abgetrennten Bandstücke nicht direkt im Ausgang der Walzanlage, da dort ungünstige visuelle Verhältnisse herrschen, wie Dunst, Emulsionsdämpfe oder sonstige Verunreinigungen. Stattdessen erfolgen sowohl die automatische Überprüfung auf periodische Fehlerarten wie auch die visuelle Überprüfung auf nicht-periodische Fehlerarten durch Prüfpersonal außerhalb der Linie. Dort sind die visuellen Verhältnisse für das Kamerasystem und das Prüfpersonal deutlich besser und der Walzvorgang des Metallbandes kann währenddessen weitergehen.

Vorteilhafterweise wird das Verfahrens der Oberflächeninspektion sofort beendet, wenn periodisch auftretende Fehlerarten detektiert werden. Der gesamte Prozess der Überprüfung in der Bandinspektionseinheit entfällt dann und es können Kosten und Zeit für die Überführung des fehlerhaften Bandstücks zur Bandinspektionseinheit eingespart werden, da das Bandstück direkt entsorgt wird.

Vorteilhafterweise erfolgt das Zuführen der abgetrennten Bandstücke zu einer Bandinspektionseinheit zum Überprüfen durch Prüfpersonal auf nicht periodische Fehlerarten nur, wenn keine periodische Fehlerart detektiert wurde. Das Prüfpersonal ist dadurch entlastet, arbeitet schneller, ermüdet später und ist somit in seiner Tätigkeit effizienter.

Gemäß einem ersten Ausführungsbeispiel werden die Bandstücke mit einer Länge von 10% bis 85% des zweifachen Umfangs der Arbeitswalze, vorzugsweise von 10% bis 40% des zweifachen Umfangs der Arbeitswalze, von dem Metallband abgetrennt. Vorteilhafterweise ergibt sich damit eine schnellere und einfachere Handhabung bei der Weiterverarbeitung der Bandstücke. Vorteilhafterweise ist der Abtransport mit dem Gabelstapler flexibler, da je nach Banddicke ca. 150 Bandstücke geladen werden können. Eine kostengünstige Weiterverarbeitung bei Nutzen von vorhandenen mechanischen Komponenten, wie Stapler oder Schrottkübel ist gegeben.

Vorteilhafterweise werden die periodischen Fehlerarten mit Hilfe eines Kamerasystems automatisch erfasst und im Fehlerfall wird dadurch ein zeitnaher Walzenwechsel ermöglicht, damit der Ausschuss an Metallband minimiert wird und kostengünstiger produziert werden kann.

Vorteilhafterweise werden die abgetrennten Bandstücke von dem Kamerasystem einzeln erfasst und die daraus resultierenden Einzelbilder nachfolgend von der Auswerteinrichtung elektronisch zu einem Gesamtbild zusammengesetzt, welches ein zusammenhängendes Bandstück mit einer Länge von mindestens dem zweifachen Umfang der Arbeitswalze repräsentiert. Anschließend wird ein automatisches Überprüfen des Gesamtbildes im Hinblick auf die eventuell vorhandenen periodischen Fehlerarten von der Auswerteinrichtung vorgenommen. Damit ergibt sich der Vorteil, dass trotz kurzer Bandstücke (Länge kleiner dem zweifachen Walzenumfang) ein elektronisches Gesamtbild eines langen Bandstückes, das mindestens zweimal dem vollen Walzenumfang der Arbeitswalze entspricht, erzeugt wird. Die periodischen Fehlerarten können elektronisch / automatisch erkannt werden, obwohl die realen geometrischen Abmessungen der abgetrennten Bandstücke dies für einen direkten Betrachter nicht zulassen würden. Vorteilhafterweise ist die Länge der Bandstücke von der notwendigen Inspektionslänge entkoppelt worden.

Vorteilhafterweise werden die erfassten periodischen Fehlerarten von einer Auswerteinrichtung auf einem Monitor angezeigt und/oder protokolliert, klassifiziert, gespeichert und/oder ausgedruckt. Somit ist das Auftreten der periodischen Fehler nicht nur sichtbar, sondern für die Zwecke der Qualitätssicherung auch zuordbar und nächvollziehbar und typische Fehlerarten werden automatisch klassifiziert. Vorteilhafterweise werden die periodischen Fehlerarten schon für das laufende Band angezeigt, beispielsweise auf einem Monitor im Hauptsteuerstand und der Bediener kann umgehend den Walzprozess stoppen.

Vorteilhafterweise wird beim Betreiben einer Walzstraße nach dem Anwalzen eines Metallbandes das erfindungsgemäße Verfahren zur Oberflächeninspektion derart durchgeführt, dass als Bandstücke Bandanfänge und/oder Bandenden des mindestens einmal gewalzten Metallbandes abgetrennt werden und die Walzstraße umgehend abgeschaltet wird, sobald eine periodisch auftretende Fehlerart bei der automatischen Überprüfung detektiert wird. Vorteilhafterweise ist erst ein Teil des Metallbandes gewalzt, währenddessen die periodisch auftretende Fehlerart detektiert wird. Dies bietet den Vorteil, dass die defekte Arbeitswalze sofort ausgewechselt werden kann, ohne weiteres Metallband schadhaft zu walzen. Vorteilhafterweise wird beispielsweise die Meldung zum Wechsel der Arbeitswalze mit defekter Oberfläche umgehend an der entsprechenden Stelle angezeigt und der Lieferausschuss dadurch gering gehalten. Der zeitnahe Wechsel bietet auch den Vorteil, dass die Arbeitswalze selber vor Zerstörung bewahrt wird. Vorteilhafterweise können durch die Schnelligkeit des Abschaltens der Anlage auftretenden Verluste gering gehalten werden, ob bei dem zu walzenden Metallband oder an der Arbeitswalze.

Die oben genannte Aufgabe wird weiterhin gelöst durch eine Vorrichtung zur Oberflächeninspektion von Bandstücken, gemäß Anspruch 6.

Die Vorteile der Vorrichtung entsprechen den oben, mit Bezug auf das erfindungsgemäße Verfahren, genannten Vorteile.

Weitere vorteilhafte Ausgestaltungen der Vorrichtung und des Verfahrens der Erfindung sind in den Unteransprüchen angegeben.

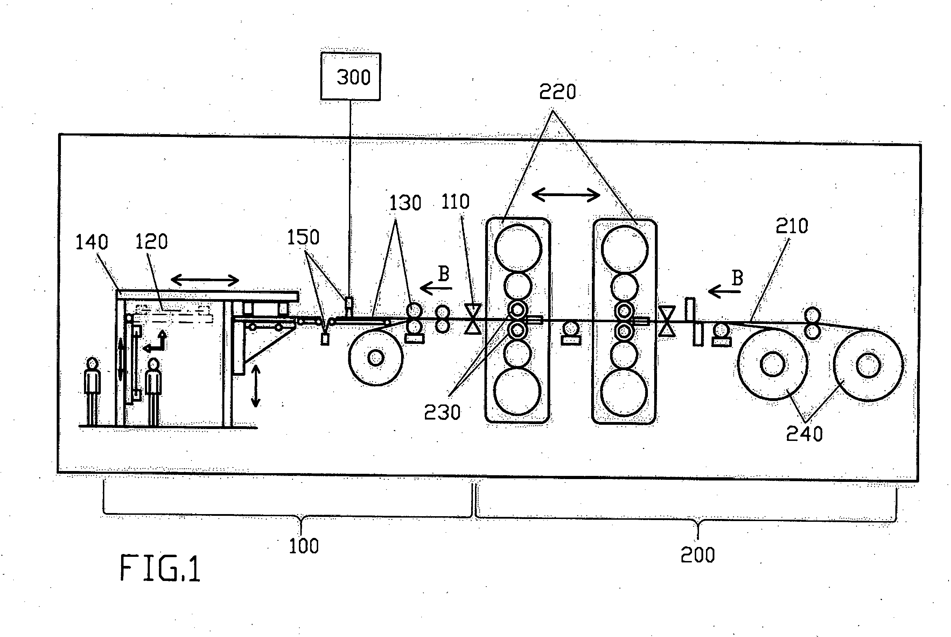

Der Beschreibung ist insgesamt eine Figur beigefügt, wobei
- Figur 1: eine Vorrichtung zur Oberflächeninspektion
zeigt.

Die erfindungsgemäße Vorrichtung und das erfindungsgemäße Verfahren werden nachfolgend unter Bezugnahme auf die Figur detailliert beschrieben.

In Figur 1 ist die erfindungsgemäße Vorrichtung 100 im unmittelbaren Anschluss an eine Walzstraße 200 dargestellt. Ein Metallband 210 wird von einem Coil 240 in Bandverarbeitungsrichtung B einem Walzgerüst 220 zugeführt. Der Bandanfang des Metallbandes 210 wird durch das Walzgerüst 220 geführt und anschließend werden Arbeitswalzen 230 angestellt, damit das Metallband gewalzt werden kann. Der Bandanfang, der noch nicht dem Walzen unterliegt wird abgetrennt und entsorgt. Durch das Abtrennen des ersten Bandanfangs ergibt sich für das Metallband 210 ein neuer Bandanfang, der von den Arbeitswalzen schon gewalzt wurde. Im Anschluss an dieses Anwalzen des Metallbandes 210 trennt eine Trenneinrichtung 110 Bandstücke 120 / Bandanfänge mit einer Länge kleiner dem zweifachen Umfang der Arbeitswalze 230 von dem Metallband 210 ab. Die Länge ist unterhalb dieser Grenze frei. Wurden die zur Oberflächeninspektion benötigten Bandstücke 120 abgetrennt, wird das Metallband dem Aufhaspel zugeführt und auf die gewünschte Dicke von den Arbeitswalzen 230 gewalzt. Schon während das Metallband gewalzt und aufgehaspelt wird, werden die zuvor abgetrennten Bandstücke 120 von einem Kamerasystem 150 erfasst, damit zeitnah ein Ergebnis der Überprüfung vorliegt. Bevor das Ende des aktuell gewalzten Metallbandes 210 erreicht ist, werden Bandstücke 120 von dem Bandende abgetrennt, die ebenfalls zu Zwecken der Oberflächeninspektion verwendet werden und der Walzprozess beginnt mit einem neuen Coil 240 von vorne.

Zum Zwecke der Überprüfung der Bandstücke 120, dies können Bandanfänge oder Bandenden sein, auf verschiedene Fehlarten erfolgt ein Weitertransport der abgetrennten Bandstücke 120 mit Hilfe einer Transporteinrichtung 130. Bevor die abgetrennten Bandstücke 120 einer Bandinspektionseinheit 140 zugeführt werden, nimmt das Kamerasystem 150 die Oberfläche der Bandstücke 120 auf. Dafür ist mindestens eine Oberflächeninspektionskamera oberhalb und/oder unterhalb der Bandstücke 120 angeordnet. Für die Bildaufnahme durch das Kamerasystem 150 ist die Länge der abgetrennten Bandstücke 120 nicht maßgeblich, da sich aus einer Vielzahl der Bildaufnahmen elektronisch eine Gesamtlänge der Bandstücke 120 von mindestens der zweifachen Umfangslänge der Arbeitswalzen 230 erstellen läßt, die für die Auswertung der eventuell aufgetretenen periodischen Oberflächenfehler notwendig ist.

Die aufgenommene Bandoberfläche, also Bilder der Ober- und Unterseite der Bandstücke 120, werden an eine Auswerteeinrichtung 300 weitergeleitet, die dem Kamerasystem 150 nachgeschaltet ist. Die Auswerteeinrichtung 300 ist so ausgelegt, dass sie Walzenabdrücke in Form von periodischen Oberflächenfehlern der Bandstücke 120 detektiert und analysiert. Nach Fehlererkennung / Segmentierung und Merkmalsextraktion werden Abdrücke auf dem Band, die mit Walzenumfang wiederkehren, gespeichert, klassifiziert, ausgedruckt und umgehend als Meldung auf einem Monitor mit z.B. einem Hinweis auf einen notwendigen Walzenwechsel angezeigt. Die Anzeige kann beispielsweise im Hauptsteuerpult erfolgen. Durch das Kamerasystem 150 und die Auswerteinrichtung 300 sind die periodischen Oberflächenfehler der Bandstücke 120, also Fehler die sich im Umfang der Arbeitswalze 230 zeigen, automatisch erfasst und zeitnah ausgewertet. In diesem Zusammenhang bedeutet zeitnah, dass der Walzprozess dann sofort ohne Zeitversatz beendet werden kann.

Wurden keine periodischen Fehlerarten detektiert, gelangt das Bandstück in die Bandinspektionseinheit 140. Dort konzentriert sich das Prüfpersonal dann lediglich auf die nicht periodischen Oberflächenfehler der Bandstücke 120. In der Bandinspektionseinheit 140 werden die Bandstücke 120 zum Erkennen von Oberflächenstrukturen von dem Prüfpersonal angeschliffen. Dazu werden die Bandstücke 120 in einer Klemmvorrichtung gehalten und geschwenkt. In dieser Position erfolgt eine Sichtkontrolle. Nach dieser Sichtkontrolle wird das Bandstück 120 in die Ausgangsposition zurückgeschwenkt und auf einen Bandstapel gelegt. Ist der Bandstapel gefüllt, wird der Stapel abgesenkt und gegebenenfalls abgebunden. Der Abtransport, der hier nicht dargestellt ist, erfolgt vorzugsweise mit einem Gabelstapler. Ein Abbinden des Stapels mit Bindeband ist vorgesehen. Für einen sinnvollen Abtransport liegt die Anzahl der Bandstücke 120 vorzugsweise bei ca. 150 Bandstücken, was sich nach dem Transportgewicht des Gabelstaplers richtet. Alternativ kann ein Entsorgen z.B. in einem Schrottkübel erfolgen.

Werden nichtperiodische Fehlerarten erkannt, erfolgt vorzugsweise ebenfalls ein Abschalten des Walzgerüstes, um die Produktion von weiterem Ausschuß zu stoppen.

### Bezugszeichenliste

- 100: Vorrichtung
- 110: Trenneinrichtung
- 120: Bandstücke
- 130: Transporteinrichtung
- 140: Bandinspektionseinheit
- 150: Kamerasystem
- 200: Walzstraße
- 210: Metallband
- 220: Walzgerüst
- 230: Arbeitswalzen
- 240: Coil

- 300: Auswerteinrichtung

- B: Bandverarbeitungsrichtung

## Patentansprüche

1. Verfahren zur Oberflächeninspektion von Bandstücken (120), wobei die Bandstücke (120) von einem Metallband (210) abgetrennt werden;
**dadurch gekennzeichnet, dass**
- die abgetrennten Bandstück (120) eine Länge kleiner dem zweifachen Umfang einer Arbeitswalze (230), mit welcher das Metallband (210) zuvor gewalzt wurde, aufweisen;
- die Ober- und/oder Unterseite der abgetrennten Bandstücke (120) mit Hilfe eines Kamerasystems (150) und einer Auswerteinrichtung (300) im Hinblick auf eventuell vorhandene durch die Arbeitswalzen verursachte periodische Fehlerarten automatisch überprüft werden;
- das Verfahren der Oberflächeninspektion beendet wird, wenn periodisch auftretende Fehlerarten detektiert werden oder;
- die abgetrennten Bandstücke (120) zu einer Bandinspektionseinheit (140) zum Überprüfen durch Prüfpersonal auf nicht periodische Fehlerarten zugeführt werden, wenn zuvor keine periodischen Fehlerarten detektiert wurden.

2. Verfahren nach Anspruch 1,
**dadurch gekennzeichnet, dass**
die Bandstücke (120) mit einer Länge von 10 % bis 85 % des zweifachen Umfangs der Arbeitswalze (230), vorzugsweise von 10 % bis 40 % des zweifachen Umfangs der Arbeitswalze (230), von dem Metallband (210) abgetrennt werden.

3. Verfahren nach Anspruch 1 oder 2,
**dadurch gekennzeichnet, dass**
die abgetrennten Bandstücke (120) von dem Kamerasystem (150) einzeln erfasst; und
die daraus resultierenden Einzelbilder nachfolgend von der Auswerteinrichtung (300) elektronisch zu einem Gesamtbild zusammengesetzt werden, welches ein zusammenhängendes Bandstück mit einer Länge von mindestens dem zweifachen Umfang der Arbeitswalze (230) repräsentiert; und
dass das automatische Überprüfen des Gesamtbildes im Hinblick auf die eventuell vorhandenen periodischen Fehlerarten von der Auswerteinrichtung (300) vorgenommen wird.

4. Verfahren nach einem der vorangegangenen Ansprüche
**dadurch gekennzeichnet, dass**
die erfassten periodischen Fehlerarten von der Auswerteinrichtung (300) auf einem Monitor angezeigt und/oder protokolliert, klassifiziert, gespeichert und/oder ausgedruckt werden.

5. Verfahren zum Betreiben einer Walzstraße (200) umfassend folgende Schritte:
Anwalzen eines Metallbandes (210),
Durchführen des Verfahrens zur Oberflächeninspektion nach einem der vorangegangenen Verfahrensansprüche,
wobei als Bandstücke (120) Bandanfänge und/oder Bandenden des zuvor mindestens einmal gewalzten Metallbandes (210) abgetrennt werden und die Walzstraße (200) umgehend abgeschaltet wird, sobald eine periodisch auftretende Fehlerart bei der automatischen Überprüfung detektiert wird.

6. Vorrichtung (100) zur Oberflächeninspektion von Bandstücken (120), mit einer Trenneinrichtung (110), die ausgebildet ist zum Abtrennen der Bandstücke (120) von einem Metallband (210), **gekennzeichnet durch**
- eine Länge der abgetrennten Bandstücke (120) kleiner dem zweifachen Umfang einer Arbeitswalze (230);
- ein Kamerasystem (150) zum automatischen Erfassen der Oberund/oder Unterseite der abgetrennten Bandstücke (120) als elektronisches Bild; und
- eine nachfolgende Auswerteinrichtung (300) zum automatischen Überprüfen der erfassten elektronischen Bilder auf eventuell auftretende periodische Fehlerarten; und
- eine Bandinspektionseinheit (140) zum Überprüfen der abgetrennten Bandstücke **durch** Prüfpersonal auf nicht periodische Fehlerarten.

7. Vorrichtung (100) nach Anspruch 6,
**dadurch gekennzeichnet, dass**
die Trenneinrichtung (110) ausgebildet ist, die Bandstücke (120) mit einer Länge von 10 % bis 85 % des zweifachen Umgangs der Arbeitswalze (230), vorzugsweise auf 10 % bis 40 % des zweifachen Umfangs der Arbeitswalze (230), von dem Metallband (210) abzutrennen.

8. Vorrichtung (100) nach einem der Ansprüche 6 oder 7,
**dadurch gekennzeichnet, dass**
das Kamerasystem (150) ausgebildet Ist, die abgetrennten Bandstücke (120) einzeln zu erfassten; und
die Auswerteinrichtung (300) ausgebildet ist zum elektronischen Zusammensetzen der Einzelbilder zu einem Gesamtbild, welches ein zusammenhängendes Bandstück mit einer Länge von mindestens dem zweifachen Umfang der Arbeitswalze (230) repräsentiert; und
das die Auswerteinrichtung (300) ausgebildet ist zum automatischen Überprüfen des Gesamtbildes im Hinblick auf die eventuell vorhandenen periodischen Fehlerarten.

9. Vorrichtung (100) nach einem der Ansprüche 6 bis 8,
**dadurch gekennzeichnet, dass**
das Kamerasystem (160) mindestens eine Kamera aufweist, die auf die Ober- und/oder Unterseite der Bandstücke (120) ausgerichtet ist.

10. Vorrichtung (100) nach einem der Ansprüche 6 bis 9,
**dadurch gekennzeichnet, dass**
die Auswerteinrichtung (300) ausgebildet ist, die periodischen Fehlerarten auf einem Monitor anzuzeigen und/oder zu protokollieren, zu klassifizieren, zu speichern und/oder auszudrucken.

11. Vorrichtung umfassend:
mindestens ein Walzgerüst (220) zum Bereitstellen von Metallband (210),
**gekennzeichnet durch**
die Vorrichtung (100) nach einem der Ansprüche 6 bis 10, wobei die Trenneinrichtung (110) in det Linie des Walzgerüstes (220) und das Kamerasystem (150) sowie die Bandinspektionseinheit (140) außerhalb der Linie angeordnet sind.

## Claims

1. Method for surface inspection of pieces of strip (120), wherein the pieces of strip (120) are separated from a metal strip (210),
**characterised in that**
- the separated pieces of strip (120) have a length smaller than twice the circumference of a work roll (230) by which the metal strip (210) was rolled beforehand;
- the upper side and/or lower side of the separated pieces of strip (120) are automatically checked with the help of a camera system (150) and an evaluating device (300) with respect to possibly present periodic forms of fault caused by the work roll;
- the process of surface inspection is concluded when periodically occurring forms of fault are detected or
- the separated pieces of strip (120) are delivered to a strip inspection unit (140) for checking by checking personnel for non-periodic forms of fault if no periodic forms of fault were detected beforehand.

2. Method according to claim 1, **characterised in that** the pieces of strip (120) with a length of 10% to 85% of twice the circumference of the work roll (230), preferably 10% to 40% of twice the circumference of the work roll (230), are separated from the metal strip (210).

3. Method according to claim 1 or 2, **characterised in that** the separated pieces of strip (120) are individually detected by the camera system (150), the individual images resulting therefrom are subsequently electronically combined by the evaluating device (300) to form an overall image representing a cohesive piece of strip with a length of at least twice the circumference of the work roll (230) and the automatic checking of the overall image with respect to possibly present periodic forms of fault is undertaken by the evaluating device (300).

4. Method according to any one of the preceding claims, **characterised in that** the detected periodic forms of fault are displayed by the evaluating device (300) on a monitor and/or logged, classified, stored and/or printed out.

5. Method of operating a rolling train (200), comprising the following steps:
rolling a metal strip (210) and
carrying out the method of surface inspection according to any one of the preceding method claims, wherein as pieces of strip (120) strip starts and/or strip ends of the metal strip (210) rolled at least once beforehand are separated off and the rolling train (200) is immediately switched off as soon as a periodically occurring form of fault is detected in the automatic checking.

6. Device (100) for surface inspection of pieces of strip (120) comprising a separating device (110) which is constructed for separating the pieces of strip (120) from a metal strip (210),
**characterised by**
- a length of the separated pieces of strip (120) smaller than twice the circumference of a work roll (230);
- a camera system (150) for automatic detection of the upper side and/or lower side of the separated pieces of strip (120) as an electronic image;
- a downstream evaluating device (300) for automatic checking of the detected electronic images for possibly occurring periodic forms of faults; and
- a strip inspection unit (140) for checking the separated pieces of strip by checking personnel for non-periodic forms of fault.

7. Device (100) according to claim 6, **characterised in that** the separating device (110) is constructed to separate the pieces of strip (120) with a length of 10% to 85% of twice the circumference of the work roll (230), preferably 10% to 40% of twice the circumference of the work roll (230), from the metal strip (210).

8. Device (100) according to one of claims 6 and 7, **characterised in that**
the camera system (150) is constructed to detect the separated pieces of strip (120) individually;
the evaluating device (300) is constructed to electronically combine the individual images to form an overall image which represents a cohesive piece of strip with a length of at least twice the circumference of the work roll (230); and
the evaluating device (300) is constructed for automatic checking of the overall image with respect to possibly present periodic forms of fault.

9. Device (100) according to any one of claims 6 to 8, **characterised in that** the camera system (150) comprises at least one camera which is directed towards the upper side and/or lower side of the pieces of strip (120).

10. Device (100) according to any one of claims 6 to 9, **characterised in that** the evaluating device (300) is constructed to display the periodic forms of fault on a monitor and/or to log, classify and/or store them and/or to print them out.

11. Device comprising at least one roll stand (220) for providing metal strip (210), **characterised by** the device (100) according to any one of claims 6 to 10, wherein the separating device (110) is arranged in the line of the roll stand (220) and the camera system (150) and the strip inspection unit (140) are arranged outside the line.

## Revendications

1. Procédé pour l'inspection superficielle de morceaux de bandes (120), les morceaux de bandes (120) étant séparés d'une bande métallique, **caractérisé en ce que** :
- les morceaux de bandes séparés (120) présentent une longueur inférieure à deux fois de la circonférence d'un cylindre de travail (230) avec lequel la bande métallique (210) a été laminée au préalable ;
- le côté supérieur et/ou le côté inférieur des morceaux de bandes séparés (120) sont examinés de manière automatique à l'aide d'un système de caméra (150) et d'un mécanisme d'évaluation (300) en ce qui concerne la présence éventuelle de types d'erreurs périodiques provoqués par le cylindre de travail ;
- le procédé d'inspection superficielle se termine lorsque des types d'erreurs apparaissant de manière périodique sont détectés ; ou
- les morceaux de bandes séparés (120) sont acheminés à une unité d'inspection de bande (140) pour examiner, via un personnel qualifié, des types d'erreurs non périodiques lorsque des types d'erreurs périodiques n'ont pas été détectés auparavant.

2. Procédé selon la revendication 1, **caractérisé en ce qu'**on sépare de la bande métallique (210) des morceaux de bandes (120) dont la longueur représente de 10 % à 85 % de deux fois la circonférence du cylindre de travail (230), de préférence de 10 % à 40 % de deux fois la circonférence du cylindre de travail (230).

3. Procédé selon la revendication 1 ou 2, **caractérisé en ce que** les morceaux de bandes séparés (120) sont enregistrés individuellement par le système de caméra (150) et les images individuelles qui en résultent sont rassemblées par la suite via le mécanisme d'évaluation (300) de manière électronique pour obtenir une image d'ensemble qui représente un morceau de bande continu dont la longueur représente au moins deux fois la circonférence du cylindre de travail (230), et **en ce que** l'examen automatique de l'image d'ensemble en ce qui concerne la présence éventuelle de types d'erreurs périodiques est mis en oeuvre par le mécanisme d'évaluation (300).

4. Procédé selon l'une quelconque des revendications précédentes, **caractérisé en ce que** les types d'erreurs périodiques enregistrés sont affichés sur un moniteur et/ou consignés, classés, mémorisés et/ou imprimés par le mécanisme d'évaluation (300).

5. Procédé pour la mise en service d'un train de laminoir (200) comprenant les étapes suivantes consistant à :
entamer le laminage d'une bande métallique (210) ;
mettre en oeuvre le procédé pour l'inspection superficielle selon l'une quelconque des revendications précédentes concernant le procédé ;
dans lequel, on sépare, à titre de morceaux de bandes (120), des débuts et/ou des fins de la bande métallique (210) laminée au moins une fois au préalable et le train de laminoir (200) est mis hors circuit directement dès la détection d'un type d'erreur qui apparaît de manière périodique, lors de l'examen automatique.

6. Dispositif (100) pour l'inspection superficielle de morceaux de bandes (120) comprenant un mécanisme de séparation (110) qui est réalisé pour la séparation des morceaux de bandes (120) par rapport à une bande métallique (210), **caractérisé par**:
- une longueur des morceaux de bandes séparés (120) inférieure à deux fois la circonférence d'un cylindre de travail (230) ;
- un système de caméra (150) pour enregistrer de manière automatique le côté supérieur et/ou le côté inférieur des morceaux de bandes séparés (120) sous la forme d'une image électronique ; et
- un mécanisme d'évaluation (300) qui lui fait suite pour l'examen automatique des images électroniques enregistrées concernant la présence éventuelle de types d'erreurs périodiques ; et
- une unité d'inspection de bande (140) pour examiner les morceaux de bandes séparés, via un personnel qualifié, en ce qui concerne des types d'erreurs non périodiques.

7. Dispositif (100) selon la revendication 6, **caractérisé en ce que** le mécanisme de séparation (110) est réalisé pour séparer, par rapport à la bande métallique (210) des morceaux de bandes (120) dont la longueur représente de 10 % à 85 % de deux fois la circonférence du cylindre de travail (230), de préférence de 10 % à 40 % de deux fois la circonférence du cylindre de travail (230).

8. Dispositif (100) selon l'une quelconque des revendications 6 ou 7, **caractérisé en ce que** le système de caméra (150) est réalisé pour enregistrer de manière individuelle les morceaux de bandes séparés (120) ; et
le mécanisme d'évaluation (300) est réalisé pour le rassemblement électronique des images individuelles afin d'obtenir une image d'ensemble qui représente un morceau de bande continu dont la longueur représente au moins deux fois la circonférence du cylindre de travail (230) ; et
**en ce que** le mécanisme d'évaluation (300) est réalisé pour l'examen automatique de l'image d'ensemble en ce qui concerne la présence éventuelle de types d'erreurs périodiques.

9. Dispositif (100) selon l'une quelconque des revendications 6 à 8, **caractérisé en ce que** le système de caméra (150) présente au moins une caméra qui est dirigée sur le côté supérieur et/ou sur le côté inférieur des morceaux de bandes (120).

10. Dispositif (100) selon l'une quelconque des revendications 6 à 9, **caractérisé en ce que** le mécanisme d'évaluation (300) est réalisé pour afficher les types d'erreurs périodiques sur un moniteur et/ou pour les consigner, pour les classer, pour les mémoriser et/ou pour les imprimer

11. Dispositif comprenant :
au moins une cage de laminoir (220) pour procurer une bande métallique (210), **caractérisé par** le dispositif (100) selon l'une quelconque des revendications 6 à 10, dans lequel le mécanisme de séparation (110) est disposé dans la ligne de la cage de laminoir (220) et le système de caméra (150) ainsi que l'unité d'inspection de bande (140) sont disposés à l'extérieur de la ligne.
